(19) **Europäisches Patentamt / European Patent Office / Office européen des brevets**

(11) **EP 4 610 127 A1**

(12) **EUROPEAN PATENT APPLICATION**
published in accordance with Art. 153(4) EPC

(43) Date of publication:
**03.09.2025   Bulletin 2025/36**

(21) Application number: **23881233.3**

(22) Date of filing: **08.06.2023**

(51) International Patent Classification (IPC):
**B60W 30/06** (2006.01)       **B62D 15/02** (2006.01)

(52) Cooperative Patent Classification (CPC):
**B62D 15/027; B60W 30/06; B60W 40/02; B62D 15/0285;** B60W 2554/80

(86) International application number:
**PCT/CN2023/099200**

(87) International publication number:
**WO 2024/087642 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   24.10.2022   CN 202211302225
                      05.01.2023   CN 202310013151

(71) Applicant: **BYD Company Limited**
**Shenzhen, Guangdong 518118 (CN)**

(72) Inventors:
- **ZHANG, Huaqi**
  **Shenzhen, Guangdong 518118 (CN)**
- **YANG, Dongsheng**
  **Shenzhen, Guangdong 518118 (CN)**
- **LIU, Ke**
  **Shenzhen, Guangdong 518118 (CN)**
- **WANG, Huan**
  **Shenzhen, Guangdong 518118 (CN)**
- **XIE, Shaocong**
  **Shenzhen, Guangdong 518118 (CN)**

(74) Representative: **Mathys & Squire**
**The Shard**
**32 London Bridge Street**
**London SE1 9SG (GB)**

(54) **PARKING SPACE DETERMINATION METHOD, STORAGE MEDIUM, CONTROLLER, AND VEHICLE**

(57)   A parking space determination method and determination apparatus, a storage medium, a controller, and a vehicle. The method comprises: acquiring a preset minimum turning radius of a vehicle, and determining reference position information according to the preset minimum turning radius of the vehicle (S1); acquiring position information of a plurality of parking spaces (S2); and, according to the position information of the plurality of parking spaces and the reference position information, determining a target parking space (S3).

acquiring a preset minimum turning radius of a vehicle, and determining reference position information according to the preset minimum turning radius of the vehicle — S1

acquiring position information of a plurality of parking spaces — S2

according to the position information of the plurality of parking spaces and the reference position information, determining a target parking space — S3

FIG. 1

## Description

### CROSS-REFERENCE TO RELATED APPLICATIONS

The present disclosure claims priority to Chinese Patent Application No. 202211302225.3 filed on October 24, 2022 and entitled "VEHICLE AND PARKING CONTROL METHOD AND CONTROL DEVICE THEREOF, AND COMPUTER READABLE STORAGE MEDIUM", and Chinese Patent Application No. 202310013151.X filed on January 5, 2023 and entitled "PARKING SPACE DETERMINATION METHOD AND DETERMINATION DEVICE, STORAGE MEDIUM, CONTROLLER, AND VEHICLE", which is incorporated herein by reference in its entirety.

### FIELD

The present disclosure relates to the field of vehicle parking technologies, and in particular, to a parking space determination method, a computer-readable storage medium, a controller, and a vehicle.

### BACKGROUND

At present, common automatic parking functions select an available parking space by default after finding the available parking space. At this time, the user can directly click the "start parking" button to use it straight away, and can also select any other available parking space displayed on the vehicle screen. Most users generally prefer to accept the parking space selected by the system by default and directly click "start parking". When the parking space selected for parking is close to the vehicle, the vehicle generally needs to be parked in the parking space after adjusting the steering wheel several times, without determining whether the vehicle can park in the parking space in one attempt. If the user wants to park in the parking space in one attempt, the user needs to manually select the parking space far away, which increases the parking time and reduces the user experience.

### SUMMARY

The present disclosure aims to at least partially solve one of the technical problems in related technologies. Therefore, the first object of the present disclosure is to provide a parking space determination method, which determines the reference position information based on the preset minimum turning radius of the vehicle, and determines the target parking space according to the position information of the parking space and the reference position information, so as to select the optimal parking space, thereby optimizing the average parking time of automatic parking of the vehicle and enhancing the user experience.

The second object of the present disclosure is to provide a parking space determination device.

The third object of the present disclosure is to provide a computer-readable storage medium.

The fourth object of the present disclosure is to provide a controller.

The fifth object of the present disclosure is to provide a vehicle.

In order to achieve the above objects, an embodiment of the first aspect of the present disclosure provides a parking space determination method, which includes: a preset minimum turning radius of the vehicle is acquired, and reference position information is determined according to the preset minimum turning radius of the vehicle; location information of a plurality of parking spaces is acquired; and the target parking space is determined according to the location information of the plurality of parking spaces and the reference location information.

According to the parking space determination method disclosed in the present embodiment, firstly, the preset minimum turning radius of the vehicle is acquired, and the reference position information is determined according to the preset minimum turning radius of the vehicle, then, the position information of the plurality of parking spaces is acquired, and finally, the target parking space is determined according to the position information of the plurality of parking spaces and the reference position information. As a result, this method can select the optimal parking space, thereby improving the average parking time of automatic parking of the vehicle and enhancing the user experience.

In addition, the parking space determination method according to the above embodiments of the present disclosure may also have the following additional technical features:

According to an embodiment of the present disclosure, the reference position information indicates a minimum lateral distance and a minimum longitudinal distance required relative to the reference point of the vehicle for the vehicle to move from a horizontal position to a perpendicular position with a preset minimum turning radius.

According to an embodiment of the present disclosure, the reference position information is determined according to the preset minimum turning radius of the vehicle, which includes: a wheelbase between the front axle and the rear axle of the vehicle is acquired; the required minimum longitudinal distance is determined according to the difference between the preset minimum turning radius and the wheelbase; the minimum required lateral distance is determined according to the sum of the preset minimum turning radius and the wheelbase.

According to an embodiment of the present disclosure, the position information includes: a longitudinal distance between the centerline of the parking space and the reference point of the vehicle, and a lateral distance between the front corner of the parking space and the reference point of the vehicle. The target parking space is determined according to the location information of the plurality of parking spaces and the reference location information, which includes: a front corner point lateral distance of the front corner point relative to the reference point after the vehicle being parked is acquired; when the longitudinal distance is greater than the required minimum longitudinal distance and the lateral distance is greater than the difference between the required minimum lateral distance and the front corner point lateral distance, the parking space corresponding to the location information is determined as the target parking space.

According to an embodiment of the present disclosure, the vehicle parking control method further includes: when each parking space meets the following conditions, according to the distance between each front corner point and the reference point, the parking space corresponding to the front corner point with the shortest distance is selected as the target parking space; the condition is that the longitudinal distance is less than or equal to the required minimum longitudinal distance, or the lateral distance is less than or equal to the difference between the required minimum lateral distance and the front corner point lateral distance.

According to an embodiment of the present disclosure, when some of the parking spaces satisfy the condition that the longitudinal distance is greater than the required minimum longitudinal distance, and the lateral distance is greater than the difference between the required minimum lateral distance and the front corner point lateral distance, according to the distance between the front corner point of each parking space and the reference point, the parking space corresponding to the front corner point with the shortest distance is selected as the target parking space.

According to an embodiment of the present disclosure, the preset minimum turning radius of a vehicle is acquired, which includes: basic parameter information of the vehicle is acquired, where the basic parameter information includes a body length, a maximum rotation angle of the front wheels, a maximum rotation angle of the rear wheels, and a maximum rotation angle of the steering wheel; the preset minimum turning radius of the vehicle is determined according to the basic parameter information.

In order to achieve the above objects, an embodiment of the second aspect of the present disclosure provides a parking space determination device, which includes: a first acquisition module, which is used for acquiring a preset minimum turning radius of a vehicle; a determination module, which is used for determining reference position information according to the preset minimum turning radius of the vehicle; a second acquisition module, which is used for acquiring location information of a plurality of parking spaces; and the determination module, which is also used for determining a target parking space according to the location information of the plurality of parking spaces and the reference location information.

According to the parking space determination device of the embodiment of the present disclosure, the first acquisition module acquires the preset minimum turning radius of the vehicle, the determination module determines the reference position information according to the preset minimum turning radius of the vehicle, the second acquisition module acquires the position information of the plurality of parking spaces, and the determination module also determines the target parking space according to the position information of the plurality of parking spaces and the reference position information. As a result, the device can select the optimal parking space, thereby improving the average parking time of automatic parking of the vehicle and enhancing the user experience.

In order to achieve the above objects, the embodiment of the third aspect of the present disclosure provides a computer-readable storage medium, having a parking space determination program stored thereon. When the parking space determination program is executed by a processor, the parking space determination method described above is implemented.

According to the computer-readable storage medium of the embodiment of the present disclosure, by implementing the above-mentioned parking space determination method during execution, the optimal parking space can be selected, thereby improving the average parking time of automatic parking of the vehicle and enhancing the user experience.

In order to achieve the above objects, the embodiment of the fourth aspect of the present disclosure provides a controller, which includes a memory, a processor, and a parking space determination program stored on the memory and executable on the processor. When the processor executes the parking space determination program, the parking space determination method described above is implemented.

According to the controller of the embodiment of the present disclosure, by executing the above-mentioned parking space determination method, the optimal parking space can be selected, thereby improving the average parking time of automatic parking of the vehicle and enhancing the user experience.

To achieve the above objects, the embodiment of the fifth aspect of the present disclosure provides a vehicle including the controller described above.

According to the vehicle of the embodiment of the present disclosure, by including the controller described above, the optimal parking space can be selected, thereby improving the average parking time of automatic parking of the vehicle and enhancing the user experience.

Additional aspects and advantages of this disclosure will be partially presented in the following description, some of which will become apparent from the following description, or learned through practice of this disclosure.

BRIEF DESCRIPTION OF THE DRAWINGS

FIG. 1 is a flowchart of a parking space determination method according to an embodiment of the present disclosure;

FIG.2 is a schematic diagram of determining the location information of a parking space according to an embodiment of the present disclosure;

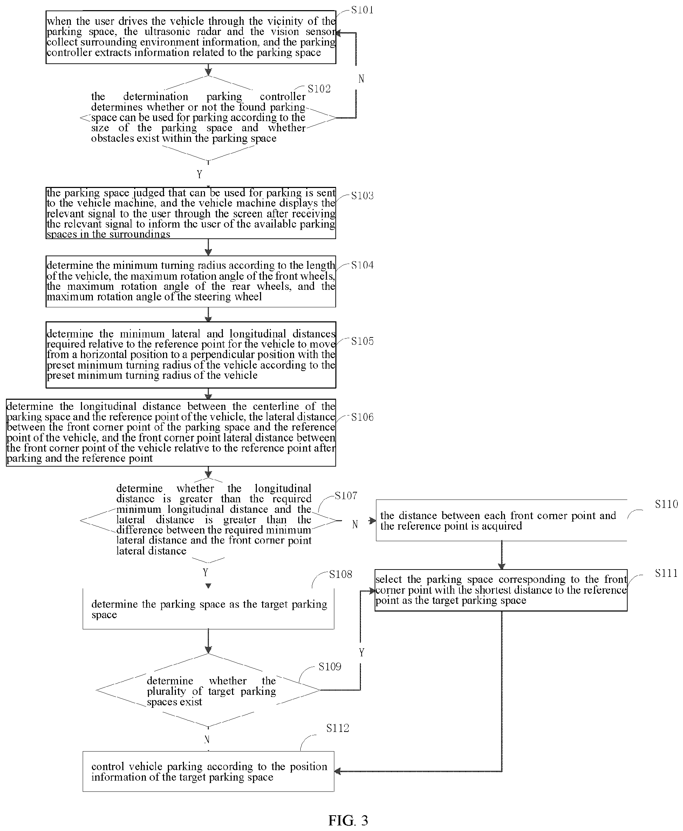

FIG.3 is a flowchart of a parking space determination method according to a specific example of the present disclosure;;

FIG.4 is a schematic block diagram of a parking space determination device according to an embodiment of the present disclosure;

FIG.5 is a schematic block diagram of a controller according to an embodiment of the present disclosure;

FIG.6 is a schematic block diagram of a vehicle according to an embodiment of the present disclosure.

## DETAILED DESCRIPTION

Embodiments of the present disclosure are described in detail below, examples of which are shown in the accompanying drawings, where the same or similar reference numerals throughout represent the same or similar elements or elements with the same or similar functions. The embodiments described below with reference to the accompanying drawings are exemplary and are intended to explain the present disclosure, and should not be construed as limiting the present disclosure.

A parking space determination method, a parking space determination device, a computer-readable storage medium, a controller, and a vehicle according to embodiments of the present disclosure will be described with reference to the drawings.

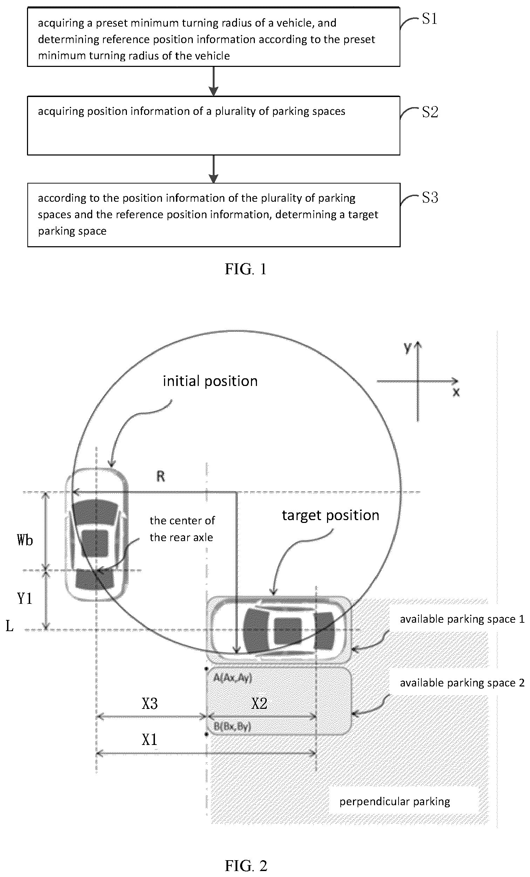

FIG. 1 is a flowchart of a parking space determination method according to an embodiment of the present disclosure.

As shown in FIG. 1, the parking space determination method of the embodiment of the present disclosure may include the following steps:

S1, the preset minimum turning radius of the vehicle is acquired, and the reference position information is determined according to the preset minimum turning radius of the vehicle. The reference position information indicates a minimum lateral distance and a minimum longitudinal distance required relative to the reference point of the vehicle for the vehicle to move from a horizontal position to a perpendicular position with a preset minimum turning radius. The reference position information can also be a minimum lateral distance and a minimum longitudinal distance required for the vehicle to move from a non-horizontal position to the parking space with a preset minimum turning radius. In order to improve the success rate of parking in one attempt, the reference position information can also be the minimum lateral distance plus a preset value, and the minimum longitudinal distance plus a preset value. For example, the preset value can be 0.1 meters.

According to an embodiment of the present disclosure, the preset minimum turning radius of a vehicle is acquired, which includes: basic parameter information of the vehicle is acquired, where the basic parameter information includes a body length, a maximum rotation angle of the front wheels, a maximum rotation angle of the rear wheels, and a maximum rotation angle of the steering wheel; the preset minimum turning radius of the vehicle is determined according to the basic parameter information.

Specifically, when the user drives a vehicle through the vicinity of a parking space, ultrasonic radar and visual sensors (such as cameras) can collect environmental information around the vehicle. The parking controller can extract information related to the parking space, such as whether obstacles exist within the parking space; the corner point coordinates of the parking space, and the size of the parking space. The parking controller can determine whether the found parking space can be used for parking according to the size of the parking space and whether obstacles exist within the parking space and send the judged parking spaces that can be used for parking to the vehicle machine. After receiving the relevant signal, the vehicle will display it to the user through the screen, and inform the user of which parking spaces are considered available by the parking system. After acquiring available parking spaces, the present disclosure can use corresponding calculation methods to determine which parking space can be used for parking in one attempt, thereby enhancing the user experience. Firstly, the preset minimum turning radius of the vehicle is acquired, where the minimum turning radius of the vehicle refers to the radius of the trajectory circle that the center plane of the outer steering wheel rolls over on the support plane when the steering wheel is turned to the extreme position and the vehicle is turning at the lowest stable speed. The minimum turning radius varies for different vehicles. When the vehicle is parked, the preset minimum turning radius R of the vehicle is acquired, and the preset minimum turning radius R of the vehicle can be determined according to the basic parameter information of the vehicle. For example, the preset minimum turning radius R is determined by the body length of the vehicle, the maximum rotation angle of the front wheels, the maximum rotation angle of the rear wheels, and the maximum rotation angle of the steering wheel.

According to an embodiment of the present disclosure, the reference position information is determined according to the preset minimum turning radius of the vehicle, which includes: a wheelbase between the front axle and the rear axle of the vehicle is acquired; the required minimum longitudinal distance is determined according to the difference between the preset minimum turning radius and the wheelbase; the required minimum lateral distance is determined according to the sum of the preset minimum turning radius and the wheelbase.

Specifically, after acquiring the preset minimum turning radius of the vehicle, the reference position information can be determined according to the preset minimum turning radius. For example, as shown in FIG. 2, the wheelbase Wb between the front axle and the rear axle of the vehicle is acquired. After acquiring the wheelbase Wb, the minimum longitudinal distance Y1 at which the vehicle can successfully enter the parking space during parking can be determined according to the difference between the preset minimum turning radius R and the wheelbase Wb. The minimum lateral distance X1 at which the vehicle can successfully enter the parking space during parking can be determined according to the sum of the preset turning radius R and the wheelbase Wb.

It should be noted that, as shown in FIG. 2, the center of the rear axle of the vehicle can be selected as the reference point of the vehicle. The initial posture of the vehicle is parallel to the road, and the parking space is perpendicular to the road. When the vehicle moves from the horizontal position to the perpendicular position with a preset minimum turning radius (i.e., the perpendicular parking area, the area that can be reached by the vehicle in the initial position only when the vehicle is in reverse gear and is perpendicular to the initial posture of the vehicle), the minimum lateral distance and the minimum longitudinal distance required relative to the reference point of the vehicle can be used as reference position information.

S2, position information of a plurality of parking spaces is acquired.

S3, the target parking space is determined according to the position information of the plurality of parking spaces and the reference position information.

According to an embodiment of the present disclosure, the position information includes: a longitudinal distance between the centerline of the parking space and the reference point of the vehicle, and a lateral distance between the front corner of the parking space and the reference point of the vehicle. The target parking space is determined according to the location information of the plurality of parking spaces and the reference location information, which includes: a front corner point lateral distance of the front corner point relative to the reference point after the vehicle being parked is acquired; when the longitudinal distance is greater than the required minimum longitudinal distance and the lateral distance is greater than the difference between the required minimum lateral distance and the front corner point lateral distance, the parking space corresponding to the position information is determined as the target parking space.

Specifically, when parking a vehicle, the position information of the plurality of parking spaces can be acquired first. For example, as shown in FIG. 2, for the plurality of parking spaces such as available parking space 1 and available parking space 2, the position information can include the longitudinal distance L1 between the center line L of the parking space and the reference point of the vehicle (L1 is the same as Y1 in FIG.2), as well as the lateral distance L2 between the front corner point of the parking space and the reference point of the vehicle (L2 is the same as X3 in FIG.2). Among them, the front corner of the parking space can be selected from any point at the entrance of the parking space, as shown in FIG.2, the front corner of available parking space 1 is A (Ax, Ay), and the front corner of available parking space 2 is B (Bx, By). After the location information of the parking space is determined, the front corner point lateral distance X2 of the front corner point of the parking space relative to the vehicle reference point (the center of the rear axle of the vehicle in the parking space in FIG.2) after the vehicle is parked. This front corner point lateral distance X2 can be calibrated according to the vehicle when it is parked and is a known quantity. The difference comparison relationship between the longitudinal distance L1 and the required minimum longitudinal distance Y1 for successful parking of the vehicle is determined, as well as the difference comparison relationship between the lateral distance L2 and the difference between the required minimum lateral distance X1 for successful parking of the vehicle and the front corner point lateral distance X2 is determined. If the longitudinal distance L1 is greater than the required minimum longitudinal distance Y1, and the lateral distance L2 is greater than the difference between the required minimum lateral distance X1 and the front corner point lateral distance X2, the parking space corresponding to this position information can be determined as the target parking space, and the vehicle can be controlled to choose this parking space for parking. This solves the problems of parking time and poor user experience caused by the system default selection of other parking spaces when one can park in a parking space in one attempt.

According to an embodiment of the present disclosure, the vehicle parking control method further includes: when each parking space satisfies the following conditions, according to the distance between each front corner point and the reference point, the parking space corresponding to the front corner point with the shortest distance is selected as the target parking space; the condition is that the longitudinal distance is less than or equal to the required minimum longitudinal distance, or the lateral distance is less than or equal to the difference between the required minimum lateral distance and the front corner point lateral distance.

Specifically, if there is no parking space that can used for perpendicular parking in one attempt, that is, there is no parking space perpendicular to the lane that the vehicle can enter after only one reverse, the nearest parking space to the vehicle can be selected as the target parking space recommended to the user. When each parking space meets the requirement that the longitudinal distance L1 is less than or equal to the required minimum longitudinal distance Y1, or when the lateral distance L2 is less than or equal to the difference between the required minimum lateral distance X1 and the front corner point lateral distance X2, it is determined that no parking space available for perpendicular parking in one attempt. The distance d between the front corner point of each parking space and the reference point can be acquired, and the parking space corresponding to the front corner point with the shortest distance d is selected as the target parking space. For example, the coordinate of the front corner of parking space 1 is (Ax, Ay), the coordinate of the front corner of parking space 2 is (Bx, By), then the distance d1 between the front corner of parking space 1 and the reference point is

$$\sqrt{A^2x + A^2y}$$

, and the distance d2 between the front corner of parking space 2 and the reference point is

$$\sqrt{B^2x + B^2y}$$

. Compare the values of d1 and d2, if d1 is less than d2, parking space 1 can be selected as the target parking space for parking; and if d1 is greater than d2, parking space 2 can be selected as the target parking space for parking, which can save parking time and enhance user experience.

According to an embodiment of the present disclosure, if some of parking spaces corresponding to the position information that satisfy the condition that the longitudinal distance is greater than the required minimum longitudinal distance and the lateral distance is greater than the difference between the required minimum lateral distance and the front corner point lateral distance, according to the distance between the front corner point of each parking space and the reference point, the parking space corresponding to the front corner point with the shortest distance is selected as the target parking space.

Specifically, if the plurality of parking spaces that meet the requirement for a vehicle to park perpendicularly in one attempt, that is, when the longitudinal distance L1 is greater than the required minimum longitudinal distance Y1, and the lateral distance L2 is greater than the difference between the required minimum lateral distance X1 and the front corner point lateral distance X2, according to the distance d between the front corner points of the plurality of parking spaces and the reference point, the parking space corresponding to the front corner point with the shortest distance d is selected as the target parking space. For example, the coordinate of the front corner of parking space 1 is (Ax, Ay), the coordinate of the front corner of parking space 2 is (Bx, By), then the distance d1 between the front corner of parking space 1 and the reference point is $\sqrt{A^2x + A^2y}$ , and the distance d2 between the front corner of parking space 2 and the reference point is $\sqrt{B^2x + B^2y}$ . Compare the values of d1 and d2, and if d1 is less than d2, parking space 1 can be selected as the target parking space, and if d1 is greater than d2, parking space 2 can be selected as the target parking space. Therefore, when the plurality of parking spaces that allow the vehicle to park perpendicularly in one attempt, the nearest parking space is selected for the user to park, which can save parking time and enhance the user experience.

As a specific example, the parking space determination method of the present disclosure may include the following steps:

As a specific example, the parking space determination method of the present disclosure may include the following steps:

S101, when the user drives the vehicle through the vicinity of the parking space, the ultrasonic radar and the vision sensor collect surrounding environment information, and the parking controller extracts information related to the parking space.

S102, the determination parking controller determines whether or not the found parking space can be used for parking according to the size of the parking space and whether obstacles exist within the parking space. If so, step S 103 is executed; if not, step S101 is executed.

S103, the parking space judged that can be used for parking is sent to the vehicle machine, and the vehicle machine displays the relevant signal to the user through the screen after receiving the relevant signal to inform the user of the available parking spaces in the surroundings.

S104, determine the minimum turning radius according to the length of the vehicle, the maximum rotation angle of the front wheels, the maximum rotation angle of the rear wheels, and the maximum rotation angle of the steering wheel.

S105, determine the minimum lateral and longitudinal distances required relative to the reference point of the vehicle for the vehicle to move from a horizontal position to a perpendicular position with the preset minimum turning radius according to the preset minimum turning radius of the vehicle.

S106, determine the longitudinal distance between the centerline of the parking space and the reference point of the vehicle, the lateral distance between the front corner point of the parking space and the reference point of the vehicle, and the front corner point lateral distance between the front corner point of the vehicle relative to the reference point after parking and the reference point.

S107, determine whether the longitudinal distance is greater than the required minimum longitudinal distance and the lateral distance is greater than the difference between the required minimum lateral distance and the front corner point lateral distance. If so, step S108 is executed; if not, step S110 is executed.

S108, determine the parking space as the target parking space.

S109, determine whether the plurality of target parking spaces exist. If so, step S111 is executed; if not, step S112 is executed.

S110, the distance between each front corner point and the reference point is acquired.

S111, select the parking space corresponding to the front corner point with the shortest distance as the target parking space, and step S112 is executed.

S112, control vehicle parking according to the position information of the target parking space.

In summary, according to the parking space determination method disclosed in the embodiment of the present disclosure, the preset minimum turning radius of the vehicle is first acquired, and the reference position information is determined according to the preset minimum turning radius of the vehicle. Then, the position information of the plurality of parking spaces is acquired, and finally, the target parking space is determined according to the position information of the plurality of parking spaces and the reference position information. As a result, this method can select the optimal parking space, thereby improving the average parking time of the automatic parking of the vehicle and enhancing the user experience.

Corresponding to the above embodiments, the present disclosure also provides a parking space determination device.

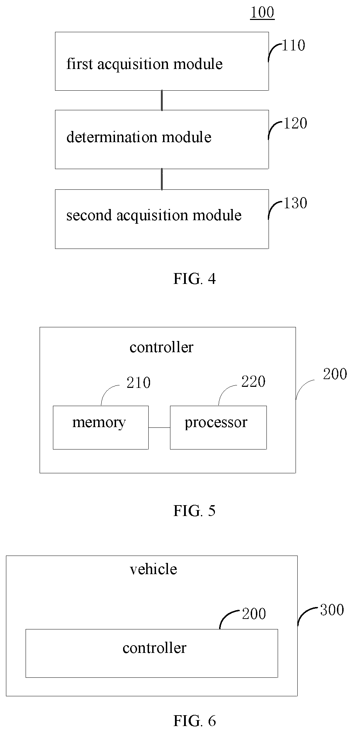

As shown in FIG. 4, the parking space determination device 100 of the embodiment of the present disclosure includes a first acquisition module 110, a determination module 120, and a second acquisition module 130.

The first acquisition module 110 is used for acquiring a preset minimum turning radius of the vehicle. The determination module 120 is used for determining reference position information according to the preset minimum turning radius of the vehicle. The second acquisition module 130 is used for acquiring location information of a plurality of parking spaces. The determination module 120 is also used for determining the target parking space according to the location information of the plurality of parking spaces and the reference location information.

According to an embodiment of the present disclosure, the reference position information indicates a minimum lateral distance and a minimum longitudinal distance required relative to the reference point of the vehicle for the vehicle to move from a horizontal position with a preset minimum turning radius to a perpendicular position.

According to an embodiment of the present disclosure, the determination module 120 determines the reference position information according to the preset minimum turning radius of the vehicle, specifically for: acquiring the wheelbase between the front and the rear axles of the vehicle; determining the required minimum longitudinal distance according to the difference between the preset minimum turning radius and wheelbase; and determining the required minimum lateral distance according to the sum of the minimum preset turning radius and wheelbase.

According to an embodiment of the present disclosure, the location information includes: a longitudinal distance between the center line of the parking space and the reference point of the vehicle, and a lateral distance between the front corner point of the parking space and the reference point of the vehicle. The control module 140 determines the target parking space according to the location information of the parking space and the reference position information, specifically for: acquiring the front corner point lateral distance of the front corner point relative to the reference point after the vehicle is parked; when the longitudinal distance is greater than the required minimum longitudinal distance and the lateral distance is greater than the difference between the required minimum lateral distance and the front corner point lateral distance, the parking space corresponding to the location information is determined as the target parking space.

According to an embodiment of the present disclosure, the determination module 120 is also used for: when each parking space meets the following conditions, according to the distance between each front corner point and the reference point, selecting the parking space corresponding to the front corner point with the shortest distance as the target parking space; the condition is that the longitudinal distance is less than or equal to the required minimum longitudinal distance, or the lateral distance is less than or equal to the difference between the required minimum lateral distance and the front corner point lateral distance.

According to an embodiment of the present disclosure, the determination module 120 is also used for: when some of the parking spaces satisfy the condition that the longitudinal distance is greater than the required minimum longitudinal distance, and the lateral distance is greater than the difference between the required minimum lateral distance and the front corner point lateral distance, according to the distance between the front corner point of each parking space and the reference point, selecting the parking space corresponding to the front corner point with the shortest distance as the target parking space.

According to an embodiment of the present disclosure, the first acquisition module 110 acquires the preset minimum turning radius of the vehicle, which is specifically used for: acquiring basic parameter information of the vehicle, where the basic parameter information includes a body length, a maximum rotation angle of the front wheel, a maximum rotation angle of the rear wheel, and a maximum rotation angle of the steering wheel; determining the preset minimum turning radius of the vehicle according to the basic parameter information.

It should be noted that for the details not disclosed in the parking space determination device of the embodiment of the present disclosure, please refer to the details disclosed in the parking space determination method of the embodiment of the present disclosure, which will not be detailed here.

According to the parking space determination device of the embodiment of the present disclosure, the first acquisition module acquires the preset minimum turning radius of the vehicle, the determination module determines the reference position information according to the preset minimum turning radius of the vehicle, the second acquisition module acquires the position information of the plurality of parking spaces, and the determination module also determines the target parking space according to the position information and reference position information of parking spaces. As a result, the device can select the optimal parking space, thereby improving the average parking time of automatic parking the vehicle and enhancing the user experience.

Corresponding to the above embodiments, the present disclosure also provides a computer-readable storage medium.

The computer-readable storage medium of the embodiment of the present disclosure stores a parking space determination program, which implements the above parking space determination method when executed by the processor.

According to the computer-readable storage medium of the embodiment of the present disclosure, by performing the above parking space determination method, the optimal parking space can be selected, so as to improve the average parking time of automatic parking of the vehicle and enhance the user experience.

Corresponding to the above embodiments, the present disclosure also provides a controller.

As shown in FIG. 5, the controller 200 of the embodiment of the present disclosure may include a memory 210, a processor 220, and a parking space determination program stored on the memory 210 and executable on the processor 220. When the processor 220 executes the parking space determination program, the above parking space determination method described above is implemented.

According to the controller of the embodiment of the present disclosure, by executing the above-mentioned parking space determination method, the optimal parking space can be selected, thereby improving the average parking time of automatic parking of the vehicle and enhancing the user experience.

Corresponding to the above embodiments, the present disclosure also provides a vehicle.

As shown in FIG. 6, the vehicle 300 of the present disclosure may include a controller 200.

According to the vehicle of the embodiment of the present disclosure, by including the controller described above, the optimal parking space can be selected, thereby improving the average parking time of automatic parking of the vehicle and enhancing the user experience.

It should be noted that the logic and/or steps represented in the flowchart or otherwise described herein, for example, can be considered as a sequenced list of executable instructions for implementing logical functions, and can be specifically implemented in any computer-readable medium for use by or in combination with an instruction execution system, device, or equipment (such as a computer-based system, a system including a processor, or other system that can take instructions from an instruction execution system, device, or equipment and execute instructions). For the purpose of this description, "computer-readable medium" may be any device that can contain, store, communicate, transmit or transmit programs for or in combination with an instruction execution system, device or equipment. More specific examples (non-exhaustive list) of computer-readable media include the following: an electrical connection section (electronic device) with one or more wiring, a portable computer disk box (magnetic device), a random access memory (RAM), a read-only memory (ROM), an erasable editable read-only memory (EPROM or flash memory), an optical fiber device, and a portable optical disk read-only memory (CDROM). In addition, the computer-readable medium may even be paper or other suitable medium on which the program can be printed, because the program can be acquired electronically, for example, by optical scanning of the paper or other medium, followed by editing, interpretation, or processing in other suitable ways if necessary, and then stored in the computer memory.

It should be understood that portions of the present disclosure may be implemented in hardware, software, firmware, or combinations thereof. In the embodiments described above, the steps or methods may be implemented with software or firmware stored in memory and executed by a suitable instruction execution system. For example, if implemented in hardware, as in another embodiment, it may be implemented with any or a combination of the following techniques well known in the art: discrete logic circuitry having logic gates for implementing logic functions on data signals, application specific integrated circuitry having suitable combinational logic gates, Programmable gate array (PGA), field programmable gate array (FPGA), etc.

In the description of the present specification, a description with reference to the terms "an embodiment", "some embodiments", "examples", "specific examples", or "some examples" or the like means that a specific feature, structure, material, or characteristic described in connection with the embodiment or example is included in at least one embodiment or example of the present disclosure. In the present description, schematic expressions of the above terms do not necessarily refer to the same embodiments or examples. Moreover, the specific features, structures, materials, or features described may be combined in a suitable manner in any one or more embodiments or examples.

Furthermore, the terms "first" and "second" are for descriptive purposes only and cannot be understood to indicate or imply relative importance or to implicitly indicate the number of technical features indicated. Thus, a feature defined as "first" or "second" may explicitly or implicitly includes at least one of the features. In the description of the present disclosure, "a plurality of" means at least two, for example, two, three, etc. unless explicitly and specifically defined otherwise.

In the present disclosure, unless otherwise explicitly specified and limited, terms such as "mounted", "connected", "linked", and "fixed" should be understood in a broad sense, for example, they may be fixed connected, detachable connected, or integrated; The connection may be mechanical or electrical; It can be directly connected, or indirectly connected through an intermediate medium, and it can be the internal communication of two elements or the interaction of two elements, unless otherwise explicitly defined. Those of ordinary skill in the art can understand the specific meanings of the above terms in the present disclosure according to specific circumstances.

Although the embodiments of the present disclosure have been shown and described above, it can be understood that the above embodiments are exemplary and cannot be understood as restrictions on the present disclosure. Those skilled in the art may make changes, modifications, replacements and modifications to the above embodiments within the scope of the present disclosure.

**Claims**

1. A parking space determination method, comprising:

   acquiring a preset minimum turning radius of a vehicle, and determining reference position information according to the preset minimum turning radius of the vehicle;
   acquiring location information of a plurality of parking spaces;
   determining a target parking space according to the location information of the plurality of parking spaces and the reference location information.

2. The parking space determination method according to claim 1, wherein the reference position information indicating a minimum lateral distance and a minimum longitudinal distance required relative to a reference point of the vehicle for the vehicle to move from a horizontal position to a perpendicular position with the preset minimum turning radius.

3. The parking space determination method according to claim 2, wherein determining the reference position information according to the preset minimum turning radius of the vehicle, further comprises:

   acquiring a wheelbase between a front axle and a rear axle of the vehicle;
   determining the required minimum longitudinal distance according to the difference between the preset minimum turning radius and the wheelbase;
   determining the required minimum lateral distance according to the sum of the preset minimum turning radius and the wheelbase.

4. The parking space determination method according to claim 2 or 3, wherein the location information comprises: a longitudinal distance between a centerline of the parking space and the reference point of the vehicle, and a lateral distance between a front corner of the parking space and the reference point of the vehicle, and determining the target parking space according to the location information of the plurality of parking spaces and the reference location information comprises:

   acquiring a front corner point lateral distance of the front corner point relative to the reference point after the vehicle being parked;
   when the longitudinal distance is greater than the required minimum longitudinal distance, and the lateral distance is greater than the difference between the required minimum lateral distance and the front corner point lateral distance, determining the parking space corresponding to the location information as the target parking space.

5. The parking space determination method according to claim 4, further comprises:

   when each parking space meets the following conditions, according to the distance between each front corner point and the reference point, selecting the parking space corresponding to the front corner point with the shortest distance as the target parking space;
   the conditions being that the longitudinal distance is less than or equal to the required minimum longitudinal distance, or the lateral distance is less than or equal to the difference between the required minimum lateral distance and the front corner point lateral distance.

6. The parking space determination method according to claim 4 or 5, wherein when some of the parking spaces satisfy the condition that the longitudinal distance is greater than the required minimum longitudinal distance, and the lateral distance is greater than the difference between the required minimum lateral distance and the front corner point lateral distance, according to the distance between the front corner point of each parking space and the reference point, selecting the parking space corresponding to the front corner point with the shortest distance as the target parking space.

7. The parking space determination method according to any one of claims 1 to 6, wherein acquiring the preset minimum turning radius of the vehicle comprises:

   acquiring basic parameter information of the vehicle, wherein the basic parameter information comprises a body length, a maximum rotation angle of the front wheels, a maximum rotation angle of the rear wheels, and a maximum rotation angle of the steering wheel;
   determining the preset minimum turning radius of the vehicle according to the basic parameter information.

8. A computer-readable storage medium, having a parking space determination program stored thereon, wherein the parking space determination program, when executed by a processor, implements the parking space determination method according to any one of claims 1 to 7.

9. A controller, comprising a memory, a processor and a parking space determination program stored on the memory and executable on the processor, the processor implementing the parking space determination method according to any one of claims 1 to 7 when executing the parking space determination program.

10. A vehicle, comprising the controller according to claim 9.

acquiring a preset minimum turning radius of a vehicle, and determining reference position information according to the preset minimum turning radius of the vehicle ⌐S1

acquiring position information of a plurality of parking spaces ⌐S2

according to the position information of the plurality of parking spaces and the reference position information, determining a target parking space ⌐S3

FIG. 1

initial position

Y

X

R

target position

the center of the rear axle

Wb

Y1

L

available parking space 1

available parking space 2

A(Ax,Ay)

X3

X2

B(Bx,By)

X1

perpendicular parking

FIG. 2

when the user drives the vehicle through the vicinity of the parking space, the ultrasonic radar and the vision sensor collect surrounding environment information, and the parking controller extracts information related to the parking space ⟋ S101

the determination parking controller determines whether or not the found parking space can be used for parking according to the size of the parking space and whether obstacles exist within the parking space ⟋ S102

N

Y

the parking space judged that can be used for parking is sent to the vehicle machine, and the vehicle machine displays the relevant signal to the user through the screen after receiving the relevant signal to inform the user of the available parking spaces in the surroundings ⟋ S103

determine the minimum turning radius according to the length of the vehicle, the maximum rotation angle of the front wheels, the maximum rotation angle of the rear wheels, and the maximum rotation angle of the steering wheel ⟋ S104

determine the minimum lateral and longitudinal distances required relative to the reference point for the vehicle to move from a horizontal position to a perpendicular position with the preset minimum turning radius of the vehicle according to the preset minimum turning radius of the vehicle ⟋ S105

determine the longitudinal distance between the centerline of the parking space and the reference point of the vehicle, the lateral distance between the front corner point of the parking space and the reference point of the vehicle, and the front corner point lateral distance between the front corner point of the vehicle relative to the reference point after parking and the reference point ⟋ S106

determine whether the longitudinal distance is greater than the required minimum longitudinal distance and the lateral distance is greater than the difference between the required minimum lateral distance and the front corner point lateral distance ⟋ S107

N

the distance between each front corner point and the reference point is acquired ⟋ S110

Y

determine the parking space as the target parking space ⟋ S108

select the parking space corresponding to the front corner point with the shortest distance to the reference point as the target parking space ⟋ S111

determine whether the plurality of target parking spaces exist ⟋ S109

Y

N

control vehicle parking according to the position information of the target parking space ⟋ S112

FIG. 3

<u>100</u>

first acquisition module — 110

determination module — 120

second acquisition module — 130

FIG. 4

controller

210          220          200

memory          processor

FIG. 5

vehicle

— 200          — 300

controller

FIG. 6

## INTERNATIONAL SEARCH REPORT

International application No.

**PCT/CN2023/099200**

| A. | CLASSIFICATION OF SUBJECT MATTER |
|---|---|

B60W30/06(2006.01)i;  B62D15/02(2006.01)i

According to International Patent Classification (IPC) or to both national classification and IPC

| B. | FIELDS SEARCHED |
|---|---|

Minimum documentation searched (classification system followed by classification symbols)

IPC：B60W,B62D

Documentation searched other than minimum documentation to the extent that such documents are included in the fields searched

Electronic data base consulted during the international search (name of data base and, where practicable, search terms used)

CNTXT, ENTXTC, VEN: 最小转弯半径, 最小停车半径, 最小转向半径, 转弯最小半径, 转向最小半径, 停车最小半径, 最小泊车半径, 泊车最小半径, 泊车半径, 停车半径, 转弯半径, 转向半径, 最大转角, 最大转弯角度, 最大转向角, 最小, 半径, 车位, 泊车, 停车, 垂直, 竖直, 距离, ROBERT, BOSCH, perpendicular, steering, park+, single movement, radius, minimum

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2009085771 A1 (WU JUI-HUNG et al.) 02 April 2009 (2009-04-02) description, paragraphs 42-54, and figures 1 and 5-7 | 1, 2, 4-10 |
| X | CN 101238022 A (ROBERT BOSCH GMBH) 06 August 2008 (2008-08-06) description, pages 5 and 6, and figures 2 and 3 | 1, 7-10 |
| X | CN 115123202 A (SHANDONG UNIVERSITY OF TECHNOLOGY) 30 September 2022 (2022-09-30) description, paragraphs 86-92, and figure 1 | 1, 7-10 |
| A | CN 106945662 A (CHONGQING UNIVERSITY et al.) 14 July 2017 (2017-07-14) entire document | 1-10 |
| A | CN 109720342 A (HANGZHOU XIANGBIN ELECTRONIC TECHNOLOGY CO., LTD.) 07 May 2019 (2019-05-07) entire document | 1-10 |
| A | CN 115162243 A (DEEPBLUE ARTIFICIAL INTELLIGENCE (SHENZHEN) CO., LTD.) 11 October 2022 (2022-10-11) entire document | 1-10 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 September 2023** | **18 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/099200** |

**C.   DOCUMENTS CONSIDERED TO BE RELEVANT**

| Category* | Citation of document, with indication, where appropriate, of the relevant passages | Relevant to claim No. |
|---|---|---|
| A | US 4931930 A (INDUSTRIAL TECHNOLOGY RESEARCH INSTITUTE) 05 June 1990 (1990-06-05)<br>    entire document | 1-10 |

Form PCT/ISA/210 (second sheet) (July 2022)

# EP 4 610 127 A1

## INTERNATIONAL SEARCH REPORT
### Information on patent family members

| International application No. |
| --- |
| **PCT/CN2023/099200** |

| Patent document cited in search report | | | Publication date (day/month/year) | Patent family member(s) | | | Publication date (day/month/year) |
| --- | --- | --- | --- | --- | --- | --- | --- |
| US | 2009085771 | A1 | 02 April 2009 | US | 7737866 | B2 | 15 June 2010 |
| CN | 101238022 | A | 06 August 2008 | DE | 102005037468 | A1 | 15 February 2007 |
| | | | | US | 2010156671 | A1 | 24 June 2010 |
| | | | | WO | 2007017351 | A1 | 15 February 2007 |
| | | | | EP | 1915285 | A1 | 30 April 2008 |
| | | | | EP | 1915285 | B1 | 11 September 2013 |
| CN | 115123202 | A | 30 September 2022 | | None | | |
| CN | 106945662 | A | 14 July 2017 | | None | | |
| CN | 109720342 | A | 07 May 2019 | | None | | |
| CN | 115162243 | A | 11 October 2022 | | None | | |
| US | 4931930 | A | 05 June 1990 | FR | 2630075 | A1 | 20 October 1989 |
| | | | | FR | 2630075 | B1 | 19 March 1993 |
| | | | | DE | 3813083 | A1 | 02 November 1989 |
| | | | | DE | 3813083 | C2 | 19 July 1990 |
| | | | | DE | 3813083 | C3 | 21 November 1996 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211302225

- CN 202310013151X